# EUROPÄISCHE PATENTSCHRIFT

(11) **EP 0 531 749 B1**
(45) Veröffentlichungstag und Bekanntmachung des Hinweises auf die Patenterteilung: **23.10.1996**
(21) Anmeldenummer: 92113999.4
(22) Anmeldetag: 17.08.1992
(51) Int. Cl.: F16H 21/00

(54) **Kraftverstärkungsvorrichtung**
Force amplifying device
Dispositif d'amplification de force

(30) Priorität: 07.09.1991 DE 4129832
(43) Veröffentlichungstag der Anmeldung: 17.03.1993
(73) Patentinhaber: Heidelberger Druckmaschinen Aktiengesellschaft, D-69115 Heidelberg (DE)
(72) Erfinder: Becker, Willi, W-6919 Bammental (DE)
(74) Vertreter: Stoltenberg, Heinz-Herbert Baldo

(56) Entgegenhaltungen:
- DE-A- 2 351 018
- FR-A- 988 675
- US-A- 3 498 143
- Roth, K., Simonek, R.: "Mechanische Verstärker"; Zeitschrift Konstruktion, Ausgabe 23, 1971, Heft 3, Springer-Verlag Berlin (DE), Heidelberg (DE), New York (US), Seiten 90-98
- MEYERS ENZYKLOPÄDISCHES LEXIKON, korrigierter Nachdruck 1981, Band 24 (Tup - Wap), Bibliographisches Institut Mannheim (DE)/Wien(AT)/Zürich(CH), Seite 738
- McGRAW-HILL ENCYCLOPEDIA OF SCIENCE & TECHNOLOGY, 6. Ausgabe 1987, McGRAW-HILL BOOK COMPANY, New York (US), Band 2 (AQU - BOO), Seiten 371-375

## Beschreibung

Die Erfindung betrifft eine Kraftverstärkungsvorrichtung nach dem Oberbegriff des Anspruchs 1 bzw. des Anspruchs 2.

Solche Kraftverstärkungsvorrichtungen sind allgemein aus dem Stand der Technik bekannt, wobei jedoch für eine große Kraftverstärkung sehr lange Hebelarme nötig sind. Im Maschinenbau ist es jedoch oftmals nicht möglich, lange Hebelarme unterzubringen, da der Bauraum räumlich begrenzt ist oder durch die dichte Bepackung einer Maschine mit anderen Maschinenelementen ein großer Hebelarm nicht unterzubringen ist.

Es existieren zwar Kraftverstärkungselemente, die eine hohe Kraftverstärkung aufweisen und nur geringen Bauraum einnehmen, wie zum Beispiel Exzenter und schiefe Ebenen, also alle Arten von Keilformen. Diese Elemente weisen bei großer Kraftverstärkung jedoch eine Selbsthemmung auf, so daß bei Unwirksamwerden der Kraftquelle ein Mechanismus vorhanden sein muß, der die Kraftverstärkung zurückstellt. Werden Keile derart ausgeführt, daß keine Selbsthemmung vorhanden ist, so ist die Kraftverstärkung nur gering.

Kraftverstärkungsvorrichtungen mit einer kraftverstärkenden Hebelanordnung, die bei relativ geringem Bedarf an Bauraum eine hohe Kraftverstärkung erbringt, sind insbesondere von Kniehebelanordnungen bekannt {siehe hierzu beispielsweise Roth et al.: Mechanische Verstärker, in Z. Konstruktion 23 (1971) Heft 3, Seiten 90 bis 98}. Hierbei ist jedoch das Kraft-Weg-Verhältnis nicht linear. Je nach Strecklage einer solchen Anordnung und bei entsprechender Gelenkreibung kann hierbei auch Selbsthemmung auftreten.

### Mittels Hebelanordnungen gebildete

Kraftübersetzungsvorrichtungen sind des weiteren von Waagen bekannt. Hierbei wird eine kleine Kraft einer Kraftquelle mittels einer Hebelübersetzung in eine größere Kraft zur Kompensation der Gewichtskraft des zu wägenden Gutes umgesetzt (siehe McGraw-Hill Encyclopedia Of Science & Technology, McGraw-Hill Book Company, New York (US), 6. Ausgabe 1987, Band 2, Seiten 371 bis 375). Als Kraftquelle dient hierbei je nach der Ausgestaltung einer Waage ein an einer Hebelanordnung hängendes Gegengewicht oder ein räumlich fest angeordnetes Magnetfeld, welches an einer, an einem Hebelsystem angeordneten, in das Magnetfeld eingeführten Tauchspule eine Gegenkraft erzeugt.

Insbesondere bei Tafelwaagen oder Dezimalwaagen setzt sich ein entsprechendes Hebelsystem aus hintereinandergeschalteten Einzelhebeln zusammen (siehe beispielsweise Meyers Enzyklopädisches Lexikon, Bibliographisches Institut Mannheim (DE)/Wien (AT)/Zürich (CH), 1979, Band 24, Seite 738).

Der Erfindung liegt die Aufgabe zugrunde, eine Kraftverstärkungsvorrichtung mit linearer Kraftverstärkung vergfügbar zu machen, die bei kompakter Bauweise eine hohe Verstärkung erbringt und bei Unwirksamwerden der Kraftquelle keine Selbsthemmung aufweist.

Diese Aufgabe wird mittels einer Kraftverstärkungsvorrichtung gemäß Anspruch 1 bzw. Anspruch 2 gelöst. Hierbei wirkt die Stellkraft der Kraftquelle auf den Spannhebel und die der Stellkraft entsprechende Abstützkraft auf einen Hebelarm eines Zusatzhebels, dessen anderer Hebelarm eine Reaktionskraft der Abstützkraft auf den an der Basis gelagerten Spannhebel zurückführt.

Neben der Vermeidung der genannten Nachteile des Standes der Technik besteht der Vorteil der Erfindung darin, daß mit relativ schwachen Kraftquellen auf kleinem Bauraum relativ große Kräfte erzeugt werden können. Als Kraftquellen dienen beispielsweise pneumatische oder hydraulische Kolben-Zylinder-Einheiten, Schhrauben, Federn oder dergleichen. Durch die hohe Kraftverstärkung wird zwar der Stellweg an der Spannstelle gering, bei vielen technischen Problemstellungen kommt es jedoch nicht auf den Stellweg an, sondern darauf, daß hohe Spannkräfte verfügbar sind.

Ein Beispiel für die Anwendung einer solchen Kraftverstärkungsvorrichtung ist die Einspannung von Druckplatten an Spannstellen von Plattenzylindern von Druckmaschinen. Lange Hebelarme lassen sich hierbei nicht einsetzen, da sich solche Hebelarme in dem Plattenzylinder nicht unterbringen lassen. Eine Kraftverstärkungsvorrichtung mit Selbsthemmung wäre hierbei ungeeignet, da die Druckplatte entfernbar sein muß, wenn die Kraftquelle, welche die Klemmung der Druckplatte herbeiführt, unwirksam wird. Als Stellweg an den Spannstellen reichen jedoch wenige 1/10 Millimeter aus und bei Verwendung von Pneumatikzylindern als Kraftquelle steht hieran ein relativ großer Stellweg zur Verfügung, so daß der nach übersetzung durch den Hebelmechanismus an einer Spannstelle noch zur Verfügung stehende Stellweg durchaus ausreichend ist.

Ein weiterer Anwendungsfall liegt vor bei Maschinen, bei denen eine starke Kraftverstärkungsvorrichtung eingefügt werden muß und die wegen ihrer geringen Ausmaße den Einbau langer Hebel nicht zulassen. Aber auch für große Maschinen, die mit Bauelementen dicht bepackt sind, ist die erfindungsgemäße Kraftverstärkungsvorrichtung durch ihre kompakte Bauweise oft die einzige technische Lösung. Ein Beispiel dafür ist das Maschinengestell von Druckmaschinen, in dem ohne völliges Umkonstruieren - was in der Regel nicht möglich ist - ein langer Hebel nicht untergebracht werden kann.

Ein weiterer wesentlicher Vorteil der Erfindung besteht darin, daß die Kraft im Schwenklager des Spannhebels, welcher die Spannkraft an der Spannstelle aufbringt, geringer ist als bei einem einzigen Hebel, der entsprechend lang ausgestaltet ist. Dies führt wiederum zu einer kompakteren Bauweise. Die erfindungsgemäße Kraftverstärkungsvorrichtung ist aus einfachen Bauteilen aufgebaut und sie ist funktionssicher. Dies gilt insbesondere für die Rückstellung im Vergleich zu Kraftverstärkungsvorrichtungen, bei denen die Selbsthemmung gelöst werden muß.

Eine Variante der Erfindung sieht die teilweise unterschiedliche Anordnung einer Mehrzahl von Zusatzhebeln vor, was den Vorteil äußerst hoher Kraftverstärkungen bei sehr kurzem Bauraum hat. Durch entsprechende Ausgestaltungen können die Kräfte im Schwenklager an der Basis im Vergleich zu einem einzigen langen Hebel beträchtlich verringert werden. Die Verstärkungskräfte nehmen bei jeder mittels eines Zusatzhebels gebildeten Verstärkungsstufe zu. Im Gegensatz zu einem Kraftverstärkungshebel nach dem Stand der Technik können die Spannstelle und die Kraftquelle auch gleiche Abstände vom Schwenklager aufweisen, da die mittels eines Zusatzhebels auf den Spannhebel zurückgeführte Reaktionskraft stärker ins Gewicht fällt als die unmittelbar von der Kraftquelle auf den Spannhebel aufgebrachte Stellkraft. Es ist selbstverständlich zweckmäßig, die ohnehin für die Rückführung der Reaktionskräfte erforderliche Baulänge des Spannhebels dazu zu nutzen, daß bereits bei dessen unmittelbaren Kraftbeaufschlagung durch die Kraftquelle eine Verstärkung erzielt wird.

Eine Kraftverstärkung findet bereits dann statt, wenn der Zusatzhebel zwei gleich lange Hebelarme aufweist und auf diese Weise die Reaktionskraft ohne Erhöhung derselben auf den Spannhebel zurückgeführt wird, da sich die Momente der Kräfte des Spannhebels und des Zusatzhebels summieren. Eine höhere Kraftverstärkung läßt sich jedoch dadurch erzielen, daß die Kraftquelle mit ihrer Abstützkraft auf einen längeren Hebelarm des Zusatzhebels wirkt und der andere, kürzere Hebelarm auf den Spannhebel zurückwirkt. Eine weitere Kraftverstärkung läßt sich dadurch erzielen, daß die Reaktionskraft des Zusatzhebels auf einen Hebelarm des Spannhebels zurückwirkt, der länger ist als jener, an dem die Kraftquelle wirkt.

Bei einer ersten Variante ist ein einziger Zusatzhebel über dessen Hebel lager unmittelbar an der Basis gelagert, während bei einer zweiten Variante ein erster Zusatzhebel über dessen Hebellager an einem Hebelarm eines zweiten Zusatzhebels gelagert ist, dessen anderer Hebelarm ebenfalls eine Reaktionskraft auf den Spannhebel zurückführt. Hierbei ist der erste Zusatzhebel somit über dessen Hebel lager mittelbar an der Basis abgestützt. Auch bezüglich des zweiten Zusatzhebels ist es wiederum möglich, daß dieser unmittelbar an der Basis oder an einem dritten Zusatzhebel gelagert ist und somit mittelbar an der Basis abgestützt ist.

Mit dem zweiten Zusatzhebel läßt sich wiederum eine große Kraftverstärkung erzielen, wenn der erste Zusatzhebel am Längern Hebelarm des zweiten Zusatzhebels gelagert ist. Eine weitere Kraftverstärkung erzielt man dadurch, daß der kürzere Hebelarm des zweiten Zusatzhebels auf einen Hebelarm des Spannhebels wirkt, der länger ist als der Hebelarm, auf den der erste Zusatzhebel wirkt.

Diese Art der Kraftverstärkung läßt sich stufenweise fortsetzen, wobei mit jedem weiteren Zusatzhebel eine weitere Verstärkungsstufe erhalten wird. Dabei ist eine Reihe von Zusatzhebeln an einem Hebelarm des jeweils nachfolgenden Zusatzhebels gelagert und die anderen Hebelarme der letzteren wirken unter bestimmten Abständen vom Schwenklager auf den Spannhebel zurück, wobei der letzte Zusatzhebel an der Basis abgestützt ist.

Die Bemessung der Hebelarme und der Abstände kann je nach der geforderten Verstärkung beziehungsweise nach der erforderlichen Kompaktheit der Bauweise gewählt werden.

Die größte Verstärkung wird dadurch erzielt, daß die Hebellager einer Reihe von Zusatzhebeln jeweils an dem längeren Hebelarm des jeweils weiteren Zusatzhebels abgestützt sind und die kürzeren Hebelarme dieser weiteren Zusatzhebel in Abständen vom Schwenklager auf den Spannhebel zurückwirken, die jeweils länger sind als der entsprechende Abstand für den vorangehenden Zusatzhebel.

Eine besonders kompakt gebaute Kraftverstärkung mit einer im Schwenklager erzeugten Lagerkraft, die im Verhältnis zu jener im Falle eines einzigen langen Hebels wesentlich herabgesetzt ist, läßt sich dadurch erzielen, daß mindestens einer der Zusatzhebel auf den Spannhebel in einem Abstand vom Schwenklager zurückwirkt, der kürzer ist als die entsprechenden Abstände für die vorangehenden Zusatzhebel. Die Rückführung einer Reaktionskraft an diesem Zusatzhebel auf den Spannhebel kann mittels einer mindestens einen der vorgangehenden Zusatzhebel durchgreifenden Stütze erfolgen.

Eine besonders geringe Lagerkraft im Schwenklager läßt sich dadurch erzielen, daß mindestens einer der Zusatzhebel auf den Spannhebel in einem Abstand vom Schwenklager zurückwirkt, der kürzer ist als der entsprechende Abstand, in dem die Kraftwelle wirkt, wobei die genannte Stütze auch den ersten Zusatzhebel durchgreift.

Die Erfindung wird anhand in der Zeichnung dargestellter Ausführungsbeispiele erläutert. Auf weitere Vorteile wird verwiesen. Es zeigen:
- Fig. 1: eine Kraftverstärkungsvorrichtung nach dem allgemein bekannten Stand der Technik,
- Fig. 2: eine erfindungsgemäße Kraftverstärkungsvorrichtung gemäß einer ersten Variante mit einem einzigen Zusatzhebel,
- Fig. 3: eine erfindungsgemäße Kraftverstärkungsvorrichtung gemäß einer zweiten Variante mit einer Mehrzahl von Zusatzhebeln,
- Fig. 4: eine erfindungsgemäße Kraftverstärkungsvorrichtung der zweiten Variante mit einem weiteren Zusatzhebel,
- Fig. 5: eine Ausführungsform besonders kompakter Bauweise mit geringer Lagerkraft im Schwenklager,
- Fig. 6: eine Ausführungsform mit besonders langen Zusatzhebeln.

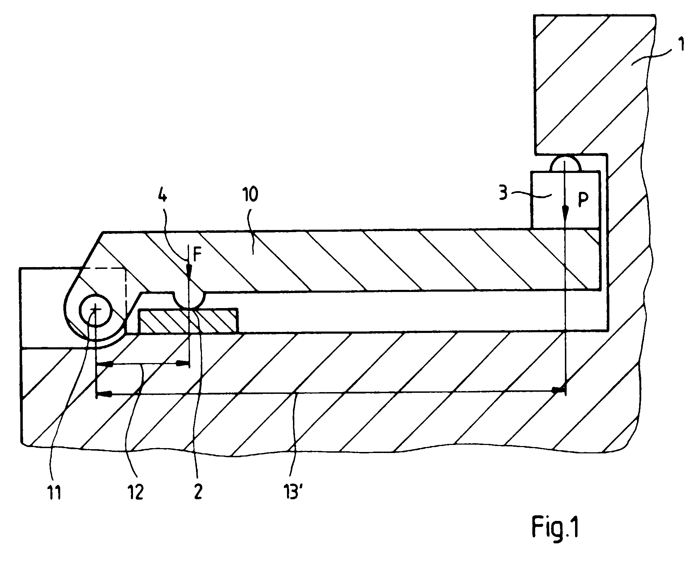

Figur 1 zeigt eine Kraftverstärkungsvorrichtung nach dem Stand der Technik. Ein Schwenkhebel 10 ist an einer Basis 1 mittels eines Schwenklagers 11 gelagert. Er weist in einem ersten Abstand 12 vom Schwenklager 11 eine Spannstelle 2 auf, an der eine Spannkraft 4 zur Verfügung steht. Die Spannkraft 4 wird dadurch erzielt, daß in einem entsprechenden zweiten Abstand 13' auf den Schwenkhebel 10 eine Stellkraft P seitens einer Kraftquelle 3 wirkt, die sich an der Basis 1 abstützt. Um hiermit eine große Kraftverstärkung zu erzielen, ist der Abstand 13' entsprechend groß zu wählen. Im dargestellten Beispiel weist der zweite Abstand 13' die fünfache Länge des ersten Abstands 12 auf, so daß eine an der Spannstelle 2 wirkende Kraft F mit der fünffachen Größe der Stellkraft P erzeugt wird.

Die folgenden Beispiele zeigen erfindungsgemäße Bauformen, mit deren Hilfe es möglich ist, mit einem Hebelsystem, das höchstens fünfmal länger ist als der erste Abstand 12, eine erheblich größere Kraftverstärkung zu erzielen.

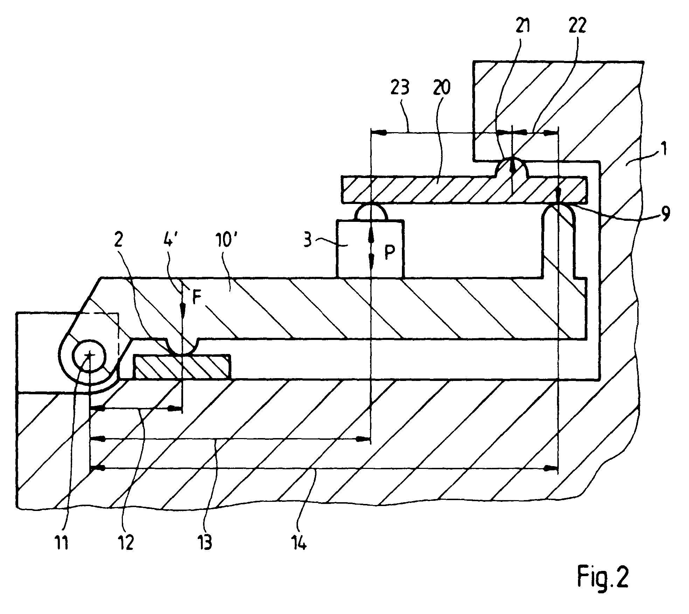

Figur 2 zeigt eine erste Variante der erfindungsgemäßen Lösung. Ein Spannhebel 10' ist an der Basis 1 ist mittels eines Schwenklagers 11 gelagert und weist in einem ersten Abstand 12 hiervon eine Spannstelle 2 auf. Auf dem Spannhebel 10' ist eine Kraftquelle 3 gelagert, die so angeordnet ist, daß sie auf den Spannhebel 10' in einem vom Schwenklager 11 gerechneten zweiten Abstand 13 wirkt, welcher die dreifache Länge des ersten Abstands 12 der Spannstelle 2 vom Schwenklager 11 aufweist. Der Spannhebel 10' trägt des weiteren ein Lager 9 für einen Zusatzhebel 20. Dieses Lager 9 ist so angeordnet, daß es einen Abstand 14 vom Schwenklager 11 von der fünffachen Länge des ersten Abstands 12 aufweist. Der Zusatzhebel 20 ist an seinem langen, ersten Hebelarm 23 von der Kraftquelle 3 beaufschlagt und stützt sich mit seinem kürzeren, zweiten Hebelarm 22 an dem Lager 9 ab. An der in der Zeichnung oberen Seite des Zusatzhebels 20 weist dieser ein zwischen seinem ersten und zweiten Hebelarm 23 und 22 gelegenes Hebel lager 21 auf, über welches der Zusatzhebel 20 an der Basis 1 abgestützt ist. Der längere Hebelarm 23 weist die dreifache Länge des kürzeren Hebelarms 22 auf.

Die Wirkungsweise ist folgende:

Bei Betätigung der Kraftquelle 3 wird sowohl die damit erzeugbare Stellkraft P als auch eine hierbei an der Kraftquelle 3 wirkende entsprechende Abstützkraft ausgenützt, indem die Kraftquelle 3 gleichzeitig den Spannhebel 10' gegen die Spannstelle 2 und den Zusatzhebel 20 unter dessen Abstützung am Lager 9 gegen die Basis 1 drückt. Hierbei wirkt seitens des Zusatzhebels 20 eine um den Faktor 3 verstärkte Reaktionskraft auf das Lager 9. Wird die Kraftquelle 3 bei deren beispielhafter Ausbildung als Pneumatikzylinder drucklos, so nehmen der Spannhebel 10' und der Zusatzhebel 20 selbsttätig eine weitgehend entspannte Lage ein.

Die Spannkraft 4' berechent sich folgendermaßen:

Die Kraftquelle 3 wirkt mit der Stellkraft P direkt auf den Spannhebel 10' unter dem zweiten Abstand 13 vom Schwenklager 11, was eine dreifache Verstärkung ergibt, also eine Kraft 3P. Zusätzlich beaufschlagt die Kraftquelle 3 den Zusatzhebel 20 mit der der Stellkraft P entsprechenden Abstützkraft, die ebenfalls dreifach verstärkt über das Lager 9 auf den Spannhebel 10' zurückgeführt wird. Das Lager 9 ist vom Schwenklager 11 in einem Abstand 14 angeordnet, welcher die fünffache Länge des ersten Abstands 12 für die Spannstelle 2 aufweist. Dadurch wirkt die am Lager 9 abgestützte, bereits auf das Dreifache der Stellkraft P verstärkte Reaktionskraft nochmals verfünffacht auf die Spannstelle 2, woraus sich eine fünfzehnfache Kraftverstärkung ergibt. Zusammengenommen ergibt sich an der Spannstelle 2 eine Kraft, die 18 x der Stellkraft P der Kraftquelle 3 entspricht. Es wird also eine achtzehnfache Kraftverstärkung bei einer Baulänge des Spannhebels 10' erzielt, die bei der herkömmlichen Kraftverstärkungsvorrichtung gemäß Fig. 1 lediglich eine fünfache Kraftverstärkung erbringen würde.

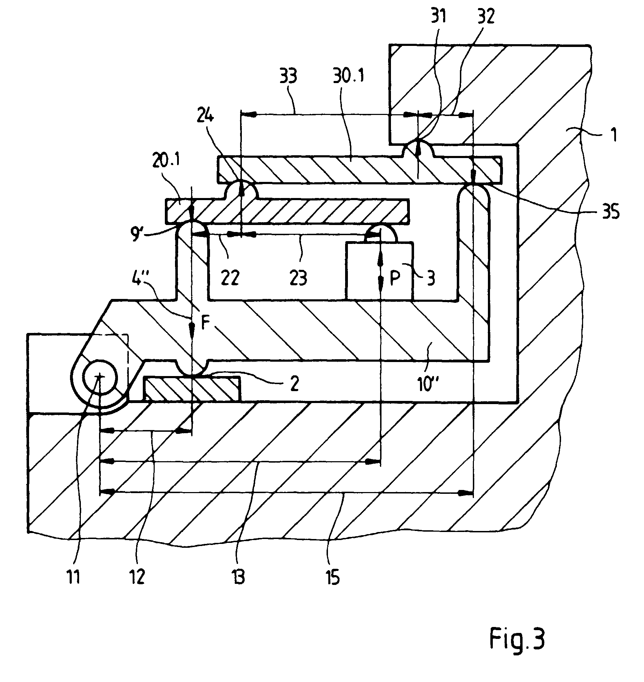

Figur 3 zeigt eine zweite Variante der erfindungsgemäßen Lösung mit einem ersten Zusatzhebel 20.1 und einem zweiten Zusatzhebel 30.1 in hintereinandergeschalteter Anordnung. Hierbei ist ein Spannhebel 10'' wiederum mittels eines Schwenklagers 11 an der Basis 1 gelagert und er weist in einem ersten Abstand 12 vom Schwenklager 11 eine Spannstelle 2 auf. Auf dem Spannhebel 10'' ist die Kraftquelle 3 in einem zweiten Abstand 13 gelagert, der wieder die dreifache Länge des ersten Abstands 12 aufweist. Der erste Zusatzhebel 20.1 ist mit seinem ersten, langen Hebelarm 23 auf der Kraftquelle 3 gelagert und mit seinem zweiten, kurzen Hebelarm 22 auf einem Lager 9', welches sich über der Spannstelle 2 befindet. Der erste Zusatzhebel 20.1 trägt ein Hebellager 24, welches am ersten, längeren Hebelarm 33 des zweiten Zusatzebels 30.1 angeordnet ist. Dieser weist ein an der Basis 1 abgestütztes Hebellager 31 und einen zweiten kürzeren Hebelarm 32 auf, welcher über ein in einem Abstand 15 vom Schwenklager 11 am Spannhebel 10'' angeordnetes Lager 35 Kraft auf den Spannhebel 10" übertragen kann.

Bei dieser Variante wird die Lagerkraft am Hebellager 24 des ersten Zusatzhebels 20.1 auf einen weiteren Zusatzhebel 30.1 übertragen, der diese Lagerkraft durch sein Hebelverhältnis verstärkt auf den Spannhebel 10'' zurückführt. Hierbei ist der erste Zusatzhebel 20.1 mittelbar und der zweite und in diesem Fall letzte Zusatzhebel 30.1 unmittelbar an der Basis 1 abgestützt.

Es ergibt sich folgende Kraftverstärkung:

Durch den Abstand 13 von der dreifachen Länge des Abstands 12 wird eine dreifache Kraftverstärkung erzielt und mittels des ersten Zusatzhebels 20.1, der auf dem Lager 9' über der Einspannstelle 2 seine Reaktionskraft dem Spannhebel 10" mitteilt und ein Hebellängenverhältnis von 3 : 1 aufweist, nochmals eine dreifache Kraftverstärkung. Es kommt hinzu, daß durch die Lagerkraft am Hebel lager 24, welche 4x der Kraft P entspricht, über das Hebelverhältnis des zweiten Zusatzhebels 30.1, welches ebenfalls eine dreifache Kraftverstärkung bewirkt, eine Reaktionskraft von 12 P auf das Lager 35 und damit auf den Spannhebel 10" übertragen wird. Das Lager 35 ist vom Schwenklager 11 im Abstand 15 angeordnet, welcher die vierfache Länge des Abstands 12 für die Spannstelle 2 aufweist. Dadurch wird die bereits zwölffache Kraft im Lager 35 nochmals vervierfacht, woraus sich eine achtundvierzigfache Kraftverstärkung ergibt. Zusammengenommen ergibt sich an der Spannstelle 2 eine Kraft, die 54x der Kraft P der Kraftquelle 3 entspricht. Es läßt sich also mit einem kürzeren Bauraum als nach dem Stand der Technik erforderlich eine vierundfünfzigfache Kraftverstärkung realisieren. Selbstverständlich muß die Kraftquelle 3 auch eine Verlagerung der Stellkraft P entlang eines Hubes vom Vierundfünfzigfachen des Spannweges des Spannhebels 10" an der Spannstelle 2 ermöglichen.

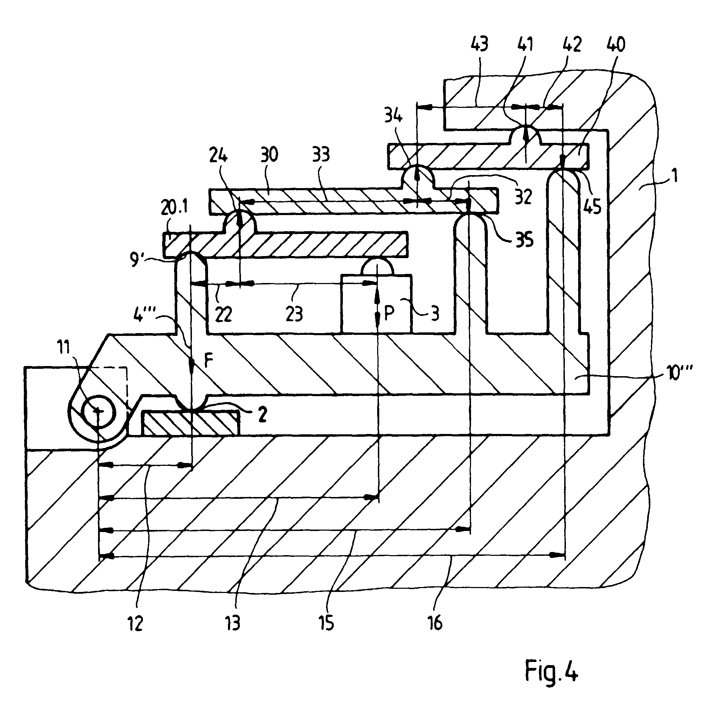

Fig. 4 zeigt eine weitere Ausführungsform mit einem einem zweiten Zusatzhebel 30 nachgeschalteten dritten Zusatzhebel 40. Bei dieser Ausführungsform liegt im übrigen der gleiche Aufbau wie in Fig. 3 vor bis auf einen verlängerten Spannhebel 10''', der zusätzlich ein weiteres Lager 45 für den dritten Zusatzhebel 40 aufweist. Der zweite Zusatzhebel 30 ist nicht an der Basis 1, sondern mittels seines Hebelagers 34 am ersten, langen Hebelarm 43 des dritten Zusatzhebels 40 gelagert, welcher sich mit seinem zweiten, kürzeren Hebelarm 42 auf dem Lager 45 und mit seinem Hebel lager 41 an der Basis 1 abstützt. Die Hebelarme aller drei Zusatzhebel 20.1, 30 und 40 weisen ein Längenverhältnis von 3:1 auf.

Es ergibt sich für die Spannkraft 4''' zunächst die bereits berechnete Spannkraft von 54 P wie in Fig. 3 sowie eine weitere Kraft dadurch, daß die Kraft von 16 P am Hebellager 34 des zweiten Zusatzhebels 30 über den dritten Zusatzhebel 40 eine dreifache Verstärkung erfährt, so daß eine Kraft von 48 P auf das Lager 45 wirkt. Diese Kraft wird durch den Abstand 16 des Lagers 45 vom Schwenklager 11 weiter verstärkt, da der Abstand 16 die fünffache Länge des Abstands 12 aufweist, wodurch an der Spannstelle 2 zusätzlich eine Kraft von 240 P wirkt. Es ergibt sich also in der Summe eine Spannkraft 4"' von 294 P.

Der für diese große Verstärkung erforderliche Bauraum ist in der Länge mit jener für den Hebel 10 nach dem Stand der Technik, wie er in Fig. 1 dargestellt ist, identisch. Lediglich in der Höhe wird ein Raum für die Unterbringung der drei Zusatzhebel benötigt.

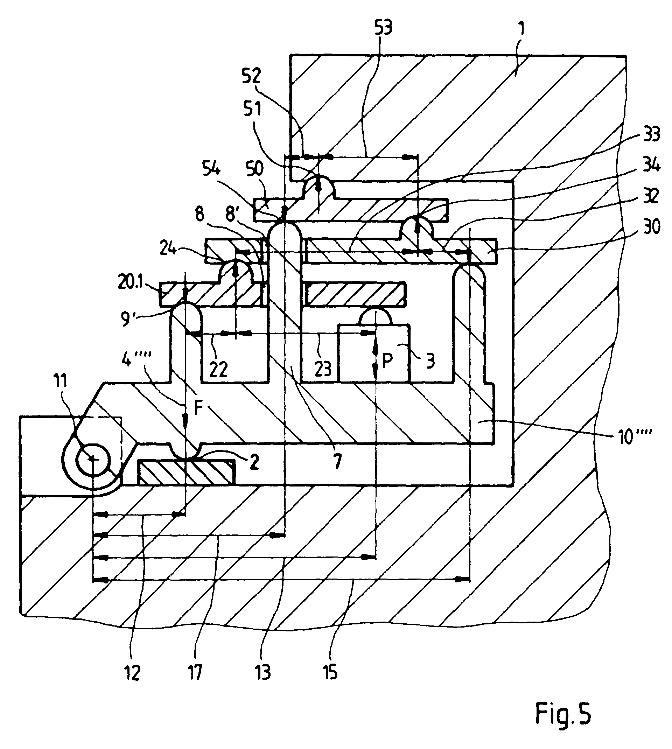

Fig. 5 zeigt ein Ausführungsbeispiel, das sich vom Ausführungsbeispiel gemäß Fig. 4 dadurch unterscheidet, daß der dritte Zusatzhebel 50 derart angeordnet ist, daß dieser in einem kürzeren Abstand 17 auf den Spannhebel 10'''' wirkt. Der dritte Zusatzhebel 50 liegt mit seinem ersten, längeren Hebelarm 53 auf einem Lager 34 des zweiten Zusatzhebels 30 auf, ist mit seinem Hebellager 51 an der Basis 1 abgestützt und teilt seine Reaktionskraft über einen kürzeren Hebelarm 52 dem Spannhebel 10'''' mit. Da der dritte Zusatzhebel 50 so angeordnet ist, daß er sich ausgehend vom Hebellager 34 des vorgeschalteten zweiten Zusatzhebels 30 in Richtung auf das Schwenklager 11 erstreckt, ist zur Rückführung seiner Reaktionskraft auf den Spannhebel 10'''' ein Lager 54 an einer am Spannhebel 10'''' ausgebildeten Stütze 7 vorgesehen, welche Durchbrechungen 8 und 8' im ersten und zweiten Zusatzhebel 20.1 und 30 durchdringt.

Der durch Verstärkung der Stellkraft P mittels des ersten und zweiten Zusatzhebels 20.1 und 30 erhaltene Anteil der Spannkraft 4'''' berechnet sich wie bereits in Verbindung mit Figur 3 ausgeführt. Der dritte Zusatzhebel 50 wird seitens des Hebellagers 34 mit einer Abstützkraft beaufschlagt, welche 16 P entspricht. Durch das Hebelverhältnis des dritten Zusatzhebels 50 von 3 : 1 überträgt dieser auf die Stütze 7 eine Kraft von 48 P, welche, da der Abstand 17 doppelt so lang wie der Abstand 12 gewählt ist, verdoppelt wird. Es ergibt sich eine Kraft von 96 P. Diese Kraft, zusammengenommen mit oben genanntem Anteil der Spannkraft 4'''' ergibt eine Verstärkung der Kraft P der Kraftquelle 3 auf das 150fache.

Die Anordnung gemäß Figur 5 hat damit zwar eine geringere Kraftverstärkung als die der Figur 4. Mit dem lediglich das Vierfache des Abstands 12 betragenden größten Abstand 15 für eine Stütze zur Rückführung der Reaktionskraft an einem der Zusatzhebel - hier am zweiten Zusatzhebel 30 - auf den Spannhebel 10''''ergibt sich eine sehr kurze, kompakte Bauweise und der weitere Vorteil, daß die Belastung im Schwenklager 11 wesentlich herabgesetzt ist.

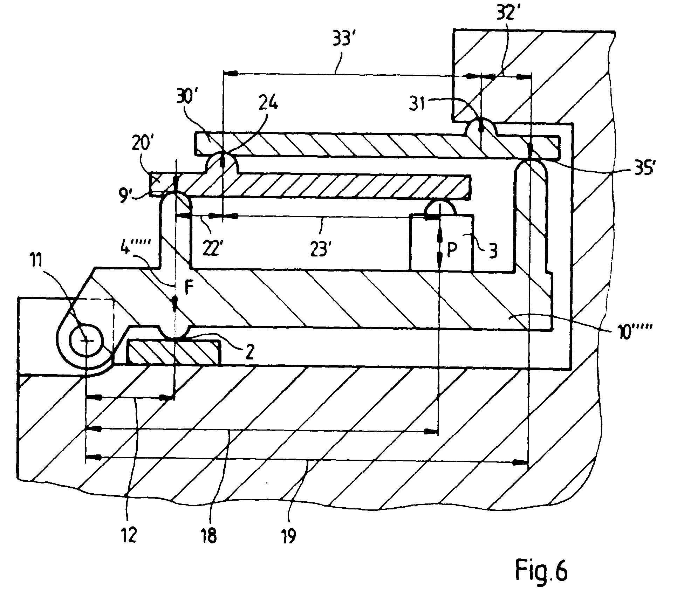

Figur 6 zeigt ein Ausführungsbeispiel, das bis auf die Längen der Hebelarme jenem gemäß Figur 3 entspricht. Die Kraftquelle 3 wirkt in einem Abstand 18 vom Schwenklager 11, wobei dieser Abstand die vierfache Länge des entsprechenden Abstands 12 für die Spannstelle 2 aufweist. Der Abstand 19, in welchem der zweite Zusatzhebel 30' seine Reaktionskraft auf den Spannhebel 10'''' zurückführt, weist die fünffache Länge des Abstands 12 für die Spannstelle 2 auf. Der erste, längere Hebelarm 23' des ersten Zusatzhebels 20' weist die fünffache Länge seines zweiten, kürzeren Hebelarms 22' auf. Der zweite Zusatzhebel 30' weist dasselbe Hebelarmlängenverhältnis auf.

Es ergibt sich somit eine Spannkraft 4''''', welche sich aus folgenden Kräften zusammensetzt:

Die von der Kraftquelle 3 auf den Spannhebel 10''''' im Abstand 18 ausgeübte Stellkraft P ergibt eine Kraft von 4P an der Spannstelle 2. Der erste Zusatzhebel 20' wird an seinem ersten, längeren Hebelarm 23' mit der der Stellkraft P entsprechenden Abstützkraft beaufschlagt und drückt mit einer Reaktionskraft vom fünffachen Betrag der Stellkraft P auf das Lager 9'. Die über das Hebellager 24 vom ersten Zusatzhebel 20' auf den zweiten Zusatzhebel 30' übertragene Abstützkraft beträgt 6 P. Aus dieser Abstützkraft resultiert eine Reaktionskraft von 30 P auf das Lager 35'. Aufgrund des Abstands 19 wird diese Kraft nochmals fünffach verstärkt, so daß sich eine Kraft von 150 P ergibt. Diese Kräfte zusammengenommen ergeben eine Spannkraft 4''''' von 159 P. Diese Vorrichtung weist den Vorteil auf, daß sie mit weniger Kraftvertärkungsstufen umkomplizierter aufgebaut ist und trotzdem eine große Kraftverstärkung bewirkt.

Die Ausführungsbeispiele stellen einen Ausschnitt aus einer nicht abschließend aufzählbaren Vielfalt von möglichen Anordnungen und Ausgestaltungen der erfindungsgemäßen Kraftverstärkungsvorrichtungen dar.

## Patentansprüche

1. Kraftverstärkungsvorrichtung mit
- einer Basis (1),
- einem Spannhebel (10, 10', 10'', 10''', 10'''', 10'''''),
- einem den Spannhebel (10, 10', 10'', 10''' ,10'''', 10''''') an der Basis (1) schwenkbar lagernden Schwenklager (11),
- einer unter einem ersten Abstand (12) vom Schwenklager (11) am Spannhebel (10, 10', 10'', 10''' ,10'''', 10''''') vorgesehenen Spannstelle (2), mittels welcher seitens des Spannhebels (10, 10', 10'', 10''' ,10'''', 10''''') eine auf die Basis (1) wirkende Spannkraft (F) ausübbar ist, welche aus einem bezüglich des Schwenklagers (11) wirksamen Moment resultiert, das mittels einer am Spannhebel (10, 10', 10'', 10''' ,10'''', 10''''') angreifenden Stellkraft (P) erzeugbar ist,
und
- einer Kraftquelle (3), mittels welcher die Stellkraft (P) unter Abstützung einer entsprechenden Abstützkraft erzeugbar ist,
**dadurch gekennzeichnet**, daß
- ein einen ersten Arm (23), einen zweiten Arm (22) sowie ein dazwischenliegendes Hebellager (21) aufweisender, über das Hebel lager (21) an der Basis (1) abgestützter Zusatzhebel (20) vorgesehen ist,
- die der Stellkraf (P) der Kraftquelle (3) entsprechende Abstützkraft am ersten Arm (23) der beiden Arme (22, 23) des Zusatzhebels (20) angreift,
und
- der zweite Arm (22) des Zusatzhebels (20) am Spannhebel (10') abgestützt ist und diesem ein bezüglich des Schwenklagers (11) wirksames Moment einprägt, welches im gleichen Sinne wirkt, wie das mittels der Stellkraft (P) der Kraftquelle (3) erzeugbare Moment.

2. Kraftverstärkungsvorrichtung mit
- einer Basis (1)
- einem Spannhebel (10, 10', 10'', 10''', 10'''', 10''''')
- einem den Spannhebel (10, 10', 10'', 10''' ,10'''', 10''''') an der Basis (1) schwenkbar lagernden Schwenklager (11),
- einer unter einem ersten Abstand (12) vom Schwenklager (11) am Spannhebel (10, 10', 10'', 10''' ,10'''', 10''''') vorgesehenen Spannstelle (2), mittels welcher seitens des Spannhebels (10, 10', 10'', 10''' ,10'''', 10''''') eine auf die Basis (1) wirkende Spannkraft (F) ausübbar ist, welche aus einem bezüglich des Schwenklagers (11) wirksamen Moment resultiert, das mittels einer am Spannhebel (10, 10', 10'', 10''' ,10'''', 10''''') angreifenden Stellkraf (P) erzeugbar ist,
und
- einer Kraftquelle (3), mittels welcher die Stellkraft (P) unter Abstützung einer entsprechenden Abstützkraft erzeugbar ist,
**dadurch gekennzeichnet**, daß
- eine Mehrzahl von hintereinandergeschalteten, jeweils einen ersten Arm (23, 33, 43, 53, 23', 33'), einen zweiten Arm (22, 32, 42, 52, 22', 32') sowie ein dazwischenliegendes Hebellager (24, 31, 34, 41, 51) aufweisenden Zusatzhebeln (20.1, 30, 30.1, 50, 20', 30') vorgesehen ist, wobei ein Teil der Zusatzhebel (20.1, 30, 30.1, 40, 50, 20' 30') mittelbar und ein verbleibender Teil der Zusatzhebel (20.1, 30, 30.1, 40, 50, 20', 30') unmittelbar über ein jeweiliges Hebellager (24, 31, 34, 41, 51) an der Basis (1) abgestützt ist, und von welchen ein erster Zusatzhebel (20.1, 20') an dessen erstem Arm (23, 23') unter dem Angriff der der Stellkraft (P) der Kraftquelle (3) entsprechenden Abstützkraft steht,
- das Hebel lager (31, 41, 51) eines letzten Zusatzhebels (30.1, 40, 50, 30') unmittelbar an der Basis (1) abgestützt ist,
- das Hebel lager (24, 34) eines beliebigen dem letzten Zusatzhebel (30.1, 30', 40, 50) vorgeschalteten Zusatzhebels (20.1, 30, 20') am ersten Arm (33, 33', 43, 53) des dem beliebigen Zusatzhebel (20.1, 20', 30) unmittelbar nachgeschalteten Zusatzhebels (30, 30.1, 30', 40, 50) abgestützt ist,
- der zweite Arm (32, 32', 42, 52) des dem beliebigen Zusatzhebel (20.1, 20', 30) unmittelbar nachgeschalteten Zusatzhebels (30, 30.1, 30', 40, 50)) am Spannhebel (10'', 10''', 10'''', 10''''') abgestützt ist und diesem ein bezüglich des Schwenklagers (11) wirksames Moment einprägt, welches im gleichen Sinne wirkt wie das mittels der Stellkraft (P) der Kraftquelle (3) erzeugbare Moment,
und
- der zweite Arm (22, 22') des ersten Zusatzhebels (20.1, 20') am Spannhebel (10'', 10''', 10'''', 10''''') abgestützt ist und diesem ein bezüglich des Schwenklagers (11) wirksames Moment einprägt, welches im gleichen Sinne wirkt, wie das mittels der Stellkraft (P) der Kraftquelle (3) erzeugbare Moment.

3. Kraftverstärkungsvorrichtung nach Anspruch 1 oder Anspruch 2,
**gekennzeichnet durch**
ein größer als oder gleich eins gewähltes Verhältnis der Länge des ersten Armes (23, 33, 43, 53, 23', 33') des Zusatzhebels (20) beziehungsweise der Zusatzhebel (20.1, 30, 30.1, 40, 50, 20', 30') zur Länge des am Spannhebel (10', 10'', 10''', 10'''', 10''''') abgestützten zweiten Armes (22, 32, 42, 52, 22', 32') des Zusatzhebels (20) beziehungsweise der Zusatzhebel (20.1, 30, 30.1, 40, 50, 20', 30').

4. Kraftverstärkungsvorrichtung nach Anspruch 1 oder 2,
**dardurch gekennzeichnet**, daß
- eine gemeinsame Wirkungslinie der Stellkraft (P) und der dieser entsprechenden Abstützkraft unter einem gegenüber dem zwischen dem Schwenklager (11) und der Spannstelle (2) bestehenden ersten Abstand (12) vergrößerten zweiten Abstand (13, 18) vom Schwenklager (11) verläuft
und
- der an seinem ersten Arm (23, 23') dem Angriff der der Stellkraft (P) der Kraftquelle (3) entsprechenden Abstützkraft unterworfene Zusatzhebel (20.1, 20') mit seinem zweiten Arm (22, 22') unter einem dem ersten Abstand (12) der Spannstelle (2) vom Schwenklager (11) entsprechenden Abstand vom Schwenklager (11) am Spannhebel (10'', 10''', 10'''', 10''''') abgestützt ist.

## Claims

1. Force amplification device with
- a base (1),
- a clamping lever (10, 10', 10'', 10''', 10'''', 10'''''),
- a pivot bearing (11) pivotably supporting the clamping lever (10, 10', 10'', 10''', 10'''', 10''''') on the base (1),
- a clamping point (2) which is provided on the clamping lever (10, 10', 10'', 10''', 10'''', 10''''') at a first distance (12) from the pivot bearing (11) and by means of which there can be exerted by the clamping lever (10, 10', 10'', 10''', 10'''', 10''''') a clamping force (F) which acts on the base (1) and which results from a moment which takes effect relative to the pivot bearing (11) and which can be generated by means of a actuating force (P) engaging on the clamping lever (10, 10', 10'', 10'', 10''', 10'''''), and
- a force source (3), by means of which the actuating force (P) can be generated with the support of a corresponding supporting force,
characterized in that
- an additional lever (20) which has a first arm (23), a second arm (22) and a lever bearing (21) located between them and which is supported on the base (1) via the lever bearing (21) is provided,
- the supporting force corresponding to the actuating force (P) of the force source (3) engages on the first arm (23) of the two arms (22, 23) of the additional lever (20),
and
- the second arm (22) of the additional lever (20) is supported on the clamping lever (10') and imparts to the latter a moment which takes effect relative to the pivot bearing (11) and which acts in the same sense as the moment which can be generated by means of the actuating force (P) of the force source (3).

2. Force amplification device with
- a base (1),
- a clamping lever (10, 10', 10'', 10''', 10'''', 10'''''),
- a pivot bearing (11) pivotably supporting the clamping lever (10, 10', 10'', 10''', 10'''', 10''''') on the base (1),
- a clamping point (2) which is provided on the clamping lever (10, 10', 10'', 10''', 10'''', 10''''') at a first distance (12) from the pivot bearing (11) and by means of which there can be exerted by the clamping lever (10, 10', 10'', 10''', 10'''', 10''''') a clamping force (F) which acts on the base (1) and which results from a moment which takes effect in relation to the pivot bearing (11) and which can be generated by means of a actuating force (P) engaging on the clamping lever (10, 10', 10'', 10''', 10'''', 10'''''), and
- a force source (3), by means of which the actuating force (P) can be generated with the support of a corresponding supporting force,
characterized in that
- a plurality of additional levers (20.1, 30, 30.1, 50, 20', 30'), which are connected in series and which each have a first arm (23, 33, 43, 53, 23', 33'), a second arm (22, 32, 42, 52, 22', 32') and a lever bearing (24, 31, 34, 41, 51) located between them, are provided, one part of the additional levers (20.1, 30, 30.1, 40, 50, 20', 30') being supported indirectly on the base (1) and the remaining part of the additional levers (20.1, 30, 30.1, 40, 50, 20', 30') being supported on the base (1) directly via a respective lever bearing (24, 31, 34, 41, 51), and of which additional levers a first additional lever (20.1, 20') is, on its first arm (23, 23'), under the action of the supporting force corresponding to the actuating force (P) of the force source (3),
- the lever bearing (31, 41, 51) of a last additional lever (30.1, 40, 50, 30') is supported directly on the base (1),
- the lever bearing (24, 34) of an arbitrary additional lever (20.1, 30, 20') preceding the last additional lever (30.1, 30', 40, 50) is supported on the first arm (33, 33', 43, 53) of the additional lever (30, 30.1, 30', 40, 50) directly following the arbitrary additional lever (20.1, 20', 30),
- the second arm (32, 32', 42, 52) of the additional lever (30, 30.1, 30', 40, 50) directly following the arbitrary additional lever (20.1, 20', 30) is supported on the clamping lever (10'', 10''', 10'''', 10''''') and imparts to the latter a moment which takes effect in relation to the pivot bearing (11) and which acts in the same sense as the moment which can be generated by means of the actuating force (P) of the force source (3), and
- the second arm (22, 22') of the first additional lever (20.1, 20') is supported on the clamping lever (10'', 10''', 10'''', 10''''') and imparts to the latter a moment which takes effect in relation to the pivot bearing (11) and which acts in the same sense as the torque which can be generated by means of the actuating force (P) of the force source (3).

3. Force amplification device according to Claim 1 or Claim 2, characterized by a ratio higher than or equal to a selected ratio of the length of the first arm (23, 33, 43, 53, 23', 33') of the additional lever (20) or of the additional levers (20.1, 30, 30.1, 40, 50, 20', 30') to the length of the second arm (22, 32, 42, 52, 22', 32') of the additional lever (20) or of the additional levers (20.1, 30, 30.1, 40, 50, 20', 30'), the said second arm being supported on the clamping lever (10', 10'', 10''', 10'''', 10''''').

4. Force amplification device according to Claim 1 or 2, characterized in that
- a common line of action of the actuating force (P) and of the supporting force corresponding to the latter runs at a second distance (13, 18) from the pivot bearing (11), the said second distance being greater than the first distance (12) existing between the pivot bearing (11) and the clamping point (2), and
- the additional lever (20.1, 20') subjected on its first arm (23, 23') to the engagement of the supporting force corresponding to the actuating force (P) of the force source (3) is supported by its second arm (22, 22') on the clamping lever (10'', 10''', 10'''', 10''''') at a distance from the pivot bearing (11) corresponding to the first distance (12) between the clamping point (2) and the pivot bearing (11).

## Revendications

1. Dispositif amplificateur de force, comprenant
- une base (1).
- un levier de serrage (10, 10', 10'', 10''', 10'''', 10'''''),
- un support de pivotement (11) supportant le levier de serrage (10, 10', 10'', 10''', 10'''', 10''''') pivotant sur la base (1).
- un lieu de serrage (2) qui est prévu sur le levier de serrage (10, 10', 10'', 10''', 10'''', 10''''') à une première distance (12) du support de pivotement (11) et au moyen duquel une force de serrage (F) agissant sur la base (1) peut être exercée par le levier de serrage (10, 10', 10'', 10''', 10'''', 10'''''), ladite force de serrage (F) résultant d'un couple qui agit par rapport au support de pivotement (11) et qui peut être généré par une force de commande (P) attaquant le levier de serrage (10, 10', 10'', 10''', 10'''', 10''''')
et
- une source de force (3) au moyen de laquelle la force de commande (P) peut être générée avec le soutien d'une force correspondante de soutien,
caractérisé
en ce qu'un levier auxiliaire (20) qui comprend un premier bras (23), un second bras (22) ainsi qu'un support de levier (21) situé entre ceux-ci et qui prend appui sur la base (1) par le support de levier (21) est prévu,
- en ce que la force de soutien, qui correspond à la force de commande (P) de la source de force (3), attaque le premier (23) des deux bras (22, 23) du levier auxiliaire (20),
et en ce que
- le second bras (22) du levier auxiliaire (20) prend appui sur le levier de serrage (10') et applique à celui-ci un couple qui agit par rapport au support de pivotement (11) et qui agit dans le même sens que le couple pouvant être généré par la force de commande (P) de la source de force (3).

2. Dispositif amplificateur de force, comprenant
- une base (1)
- un levier de serrage (10, 10', 10'', 10''', 10'''', 10'''''),
- un support de pivotement (11) supportant le levier de serrage (10, 10', 10'', 10''', 10'''', 10''''') pivotant sur la base (1),
- un lieu de serrage (2) qui est prévu sur le levier de serrage (10, 10', 10'', 10''', 10'''', 10''''') à une première distance (12) du support de pivotement (11) et au moyen duquel une force de serrage (F) agissant sur la base (1) peut être exercée par le levier de serrage (10, 10', 10'', 10''', 10'''', 10'''''), ladite force de serrage (F) résultant d'un couple agissant par rapport au support de pivotement (11) et pouvant être généré au moyen d'une force de commande (P) attaquant le levier de serrage (10, 10', 10'', 10''', 10'''', 10''''')
et
- une source de force (3) au moyen de laquelle la force de commande (P) peut être générée avec le soutien d'une force correspondante de soutien,
caractérisé
en ce que plusieurs leviers auxiliaires (20.1, 30, 30.1, 40, 50, 20', 30') montés à la suite les uns des autres et dont chacun comprend un premier bras (23, 33, 43, 53, 23', 33'), un second bras (22, 32, 42, 52, 22', 32') ainsi qu'un support de levier (24, 31, 34, 41, 51) situé entre ceux-ci sont prévus, une partie des leviers auxiliaires (20.1, 30, 30.1, 40, 50, 20', 30') prenant appui indirectement et une partie restante des leviers auxiliaires (20.1, 30, 30.1, 40, 50, 20', 30') prenant appui directement sur la base (1) par un support de levier individuel (24, 31, 34, 41, 51), le premier bras (23, 23') d'un premier (20.1, 20') de ces leviers auxiliaires étant attaqué par la force de soutien qui correspond à la force de commande (P) de la source de force (3),
en ce que le support de levier (31, 41, 51) d'un dernier levier auxiliaire (30.1, 40, 50, 30') prend appui directement sur la base (1)
- en ce que le support de levier (24, 34) de l'un quelconque des leviers auxiliaires (20.1, 30, 20') monté en amont du dernier levier auxiliaire (30.1, 30', 40, 50) prend appui sur le premier bras (33. 33', 43, 53) du levier auxiliaire (30, 30.1, 30', 40, 50) monté directement en aval du levier auxiliaire quelconque (20.1, 20', 30'),
en ce que le second bras (32, 32', 42, 52) du levier auxiliaire (30, 30.1, 30', 40, 50) monté directement en aval du levier auxiliaire quelconque (20.1, 20', 30) prend appui sur le levier de serrage (10'', 10''', 10'''', 10''''') et applique à celui-ci un couple qui agit par rapport au support de pivotement (11) et qui agit dans le même sens que le couple pouvant être généré par la force de commande (P) de la source de force (3)
et en ce que
- le second bras (22, 22') du premier levier auxiliaire (20.1, 20') prend appui sur le levier de serrage (10'', 10''', 10'''', 10''''') et applique à celui-ci un couple qui agit par rapport au support de pivotement (11) et qui agit dans le même sens que le couple pouvant être généré par la force de commande (P) de la source de force (3).

3. Dispositif amplificateur de force selon la revendication 1 ou la revendication 2,
caractérisé par
un rapport, adopté supérieur ou égal à un, de la longueur du premier bras (23, 33, 43, 53, 23', 33') du levier auxiliaire (20) ou des leviers auxiliaires (20.1, 30, 30.1, 40, 50, 20', 30') à la longueur du second bras (22, 32, 42, 52, 22', 32') du levier auxiliaire (20) ou des leviers auxiliaires (20,1, 30, 30.1, 40, 50, 20', 30') qui prend appui sur le levier de serrage (10', 10'', 10''', 10'''', 10''''').

4. Dispositif amplificateur de force selon la revendication 1 ou la revendication 2,
caractérisé
- en ce qu'une ligne commune d'action de la force de commande (P) et de la force de soutien correspondant à celle-ci se trouve à une seconde distance (13, 18) du support de pivotement (11) qui est supérieure à la première distance (12) comprise entre le support de pivotement (11) et le lieu de serrage (2) et
- en ce que le levier auxiliaire (20.1, 20'), dont le premier bras (23, 23') subit l'attaque de la force de soutien correspondant à la force de commande (P) de la source de force (3), prend appui par son second bras (22, 22') sur le levier de serrage (10'', 10''', 10'''', 10''''') à une distance du support de pivotement (11) qui correspond à la première distance (12) séparant le lieu de serrage (2) et le support de pivotement (11).
